Europäisches Patentamt

European Patent Office

Office européen des brevets

(11) Veröffentlichungsnummer: **0 279 927 B1**

# (12) EUROPÄISCHE PATENTSCHRIFT

(45) Veröffentlichungstag der Patentschrift: **29.01.92**

(21) Anmeldenummer: **87118005.5**

(22) Anmeldetag: **05.12.87**

(51) Int. Cl.⁵: **B29C 47/10**

(54) **Materialzuführvorrichtung für einen Extruder.**

(30) Priorität: **25.02.87 DE 3705963**

(43) Veröffentlichungstag der Anmeldung:
**31.08.88 Patentblatt 88/35**

(45) Bekanntmachung des Hinweises auf die
Patenterteilung:
**29.01.92 Patentblatt 92/05**

(84) Benannte Vertragsstaaten:
**AT BE CH DE FR GB IT LI NL SE**

(56) Entgegenhaltungen:
**CH-A- 637 062        DD-A- 200 214
DE-A- 2 353 110      DE-A- 2 634 280
DE-A- 3 303 766      LU-A- 33 803
US-A- 2 604 659      US-A- 3 780 801
US-A- 4 110 844**

(73) Patentinhaber: **INOEX GmbH
Innovationen und Ausrüstungen für die Extrusionstechnik Borweg 27
W-4970 Bad Oeynhausen 1(DE)**

(72) Erfinder: **Neumann, Ulrich
Im Kerksiek 10
W-4970 Bad Oeynhausen 1(DE)**
Erfinder: **Wölfl, Volkmar
Topsundernweg 5
W-4973 Vlotho/Valdorf(DE)**

(74) Vertreter: **Cohausz & Florack Patentanwälte
Postfach 14 01 61 Schumannstrasse 97
W-4000 Düsseldorf 1(DE)**

# Beschreibung

Die Erfindung bezieht sich auf eine Materialzuführvorrichtung für einen Extruder, bestehend aus einem insbesondere trichterförmigen Vorratsbehälter, der als Waagebehälter einer Massendurchsatzwiegeeinrichtung frei beweglich von Meßorganen getragen ist und mit einem rohrförmigen Auslauf in den Einlauf einer Fördereinheit des Extruders, insbesondere eines Zylinders mit darin angeordneter Förderschnecke einmündet, wobei der Auslauf und der Einlauf nach außen durch eine Dichtung abgedichtet sind, die dem Vorratsbehälter eine freie Beweglichkeit ermöglicht.

Bei einer bekannten Materialzuführvorrichtung dieser Art, siehe zum Beispiel LU-A- 33 803, ist die Dichtung als Faltenbalg ausgebildet, der mit seinem einen Rand am Eingang der Fördereinheit und mit seinem anderen Rand am Auslauf des Vorratsbehälters angeschlossen ist. Diese Dichtung überbrückt einen axialen Spalt zwischen dem Auslauf und dem Eingang und ermöglicht sowohl eine freie vertikale als auch eine freie horizontale Bewegung des Vorratsbehälters mit seinem Auslauf gegenüber der mit ihrem Eingang unbeweglich angeordneten Fördereinheit. Diese freie Bewegung ist notwendig, weil anderenfalls eine kontinuierliche Erfassung des Massendurchsatzes durch die Wiegeeinrichtung nicht möglich ist.

Beim Einsatz einer solchen Materialzuführvorrichtung hat sich jedoch gezeigt, daß die Erfassung des Massendurchsatzes fehlerbehaftet ist. Es wurde gefunden, daß eine Fehlerquelle die flexible Faltenbalgdichtung ist. Um die Dichtfunktion zu erfüllen, kann die Dichtung nicht unendlich flexibel sein, sondern braucht eine gewisse Steifigkeit. Durch die Dichtung wird besonders die horizontale Beweglichkeit eingeschränkt, die aber notwendig ist, denn wenn beispielsweise als Meßorgane Biegestäbe eingesetzt sind, kommt es zwangsläufig zu Horizontalbewegungen des Waagebehälters.

Der Erfindung liegt die Aufgabe zugrunde, die Materialzuführvorrichtung der eingangs genannten Art dahingehend zu verbessern, daß durch die Dichtung bedingte Meßfehler bei der Massendurchsatzerfassung vermindert werden.

Diese Aufgabe wird erfindungsgemäß dadurch gelöst, daß die Dichtung aus einem starren Ring besteht, der mit einer an der radialen Innenseite vorgesehenen, umlaufenden Dichtungsfläche, insbesondere einer Dichtlippe, außen an dem rohrförmig ausgebildeten Auslauf des Vorratsbehälters axial beweglich anliegt und mit einer unterseitigen ebenen Dichtringfläche auf einer auf dem Einlauf der Fördereinheit vorgesehenen ebenen Dichtfläche verschiebbar abgestützt ist. Vorzugsweise ist die unterseitige ebene Dichtfläche der Dichtung als Dichtlippe ausgebildet. Nach einer weiteren Ausgestaltung können die aufeinander gleitenden Teile mit einem reibungsvermindernden Belag versehen sein.

Aufgrund der erfindungsgemäßen Ausbildung der Dichtung kann sich beim Wiegen der Vorratsbehälter praktisch kraftlos in allen drei Achsen gegenüber dem stationären Einlauf der Fördereinheit bewegen. Nicht länger ist es erforderlich, einen Kompromiß zwischen der wegen der Dichtwirkung geforderten Eigensteifigkeit der Dichtung und der für eine möglichst fehlerfreie Messung geforderten Beweglichkeit der Dichtung einzugehen. Wegen der Ausbildung der Dichtung als starrer Ring ist die Dichtwirkung optimal. Die Dichtung läßt sich als starrer Ring deshalb verwirklichen, weil bei ihr für beide Bewegungsarten, nämlich der Vertikalbewegung und der Horizontalbewegung, voneinander unabhängige Dichtflächen vorgesehen sind, die auch bei Verlagerung des Vorratsbehälters ihre Form behalten. Da mit den modernen Techniken die Reibfaktoren an den Dichtflächen extrem niedrig gehalten werden können, wird so gut wie keine Kraft für die Verschiebung benötigt, so daß sich auch praktisch kein Meßfehler auf dem Bereich der Dichtung ergibt.

Im folgenden wird die Erfindung anhand einer Zeichnung näher erläutert, die in schematischer Darstellung in Seitenansicht ein Ausführungsbeispiel einer Materialzufuhrvorrichtung zeigt.

An einem Kragarm 1 eines Ständers 2 ist über Meßorgane 3 ein von oben mit Material füllbarer, als Waagebehälter ausgebildeter Vorratsbehälter 4 aufgehängt. Die auf diametral gegenüberliegenden Seiten angeordneten Meßorgane 3 sind auf Biegung ansprechende Elemente. Ihre Meßwerte liefern sie an eine nicht dargestellte Auswerteeinrichtung für die Massendurchsatzerfassung. Der Ständer 2 ist starr mit einem Einlauf 5 einer Fördereinheit 6 verbunden, die aus einem Zylinder 7 mit einer darin angeordneten und von einem Antrieb 8 angetriebenen Schnecke 9 und einer Extruderdüse 10 besteht.

Der Vorratsbehälter 4 weist an seinem sich verjüngenden unteren Teil ein Übergangsstück 11 mit einer schrägen Fläche 12 auf. Seitlich an diesem Übergangsstück 11 ist ein rohrförmiger Auslauf 13 vorgesehen. Das aus dem Vorratsbehälter 4 in das Übergangsstück 11 gelangende Material bricht an seiner dem Auslauf 13 zugekehrten Seite ab und gelangt auf diese Art und Weise in den Auslauf 13. Dadurch erreicht man eine Entkopplung des Massenstroms, der sonst zu Meßfehlern führen könnte.

Der untere Rand 14 des Auslaufs 13 ist mit vertikalem Abstand gegenüber der oberen Seite 15 des Einlaufs 5 angeordnet. Der deshalb bestehende Spalt ist mittels einer Dichtung 16 abgedichtet, die aus einem starren Ring besteht. Die Dichtung 16 umgibt den rohrförmigen Auslauf 13 und liegt mit einer Dichtlippe 17 außen am Auslauf 13 an. Der Auslauf 13 ist also gegenüber der ringartigen Dichtung 16 vertikal beweglich.

Die Oberseite 15 des Einlaufs 5 ist als ebene Dichtfläche ausgebildet. Auf ihr ruht die ringartige Dichtung 16 mit einer ebenen Dichtlippe 18. Wegen dieser Ausbildung läßt sich die ringartige Dichtung 16 in beiden Achsen horizontal auf der ebenen Dichtlippe 18 verschieben. Es versteht sich, daß die oberseitige ebene Dichtfläche 15 des Einlaufs 5 derart bemessen sein muß, daß die ringförmige Dichtung 16 alle geforderten horizontalen Bewegungen ausführen kann, ohne mit ihrer Dichtlippe 18 aus dem Bereich der ebenen Dichtfläche 15 zu gelangen.

Wegen der durch den starren Ring gebildeten Dichtung 16 und den ihr zugeordneten Dichtflächen am rohrförmigen Auslauf 13 und auf dem Einlauf 5 kann der Vorratsbehälter sich in allen drei Achsen, d.h. in der vertikalen und den beiden horizontalen Achsen verlagern, ohne daß dafür meßwertverfälschende Kräfte notwendig sind. Die für die Verschiebung notwendigen Kräfte sind bei entsprechender Oberflächengestaltung und Materialauswahl vernachlässigbar klein. Neben diesem Vorteil der verbesserten Meßgenauigkeit bringt die Erfindung den weiteren Vorteil der längeren Standzeit und der einfachen Montage und Demontage. Nicht länger müssen die Dichtungen an Einlauf und Auslauf angeschlossen werden. Bei der Erfindung braucht der Ring nur aufgesetzt bzw. eingesteckt zu werden.

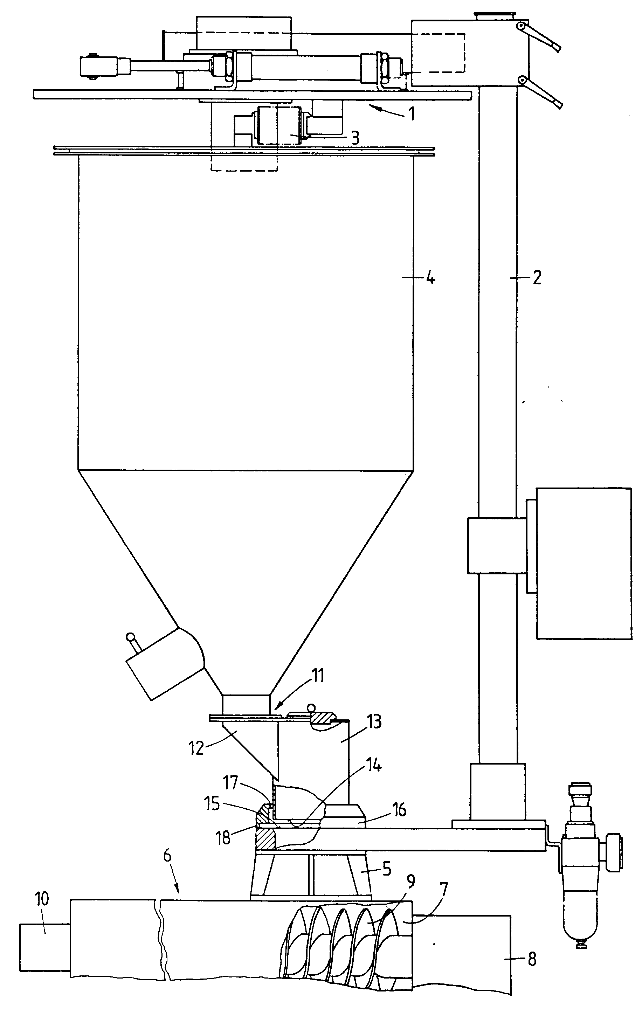

## Patentansprüche

1. Materialzuführvorrichtung für einen Extruder, bestehend aus einem insbesondere trichterförmigen Vorratsbehälter (4), der als Waagebehälter einer Massendurchsatzwiegeeinrichtung frei beweglich von Meßorganen (3) getragen ist und mit einem rohrförmigen Auslauf in den Einlauf (5) einer Fördereinheit (6) des Extruders, insbesondere eines Zylinders mit darin angeordneter Förderschnecke einmündet, wobei der Auslauf und der Einlauf nach außen durch eine Dichtung (16) abgedichtet sind, die dem Vorratsbehälter eine freie Bewegung ermöglicht, **dadurch gekennzeichnet,** daß die Dichtung (16) aus einem starren Ring besteht, der mit einer an der radialen Innenseite vorgesehenen, umlaufenden Dichtungsfläche (17) außen an dem rohrförmig ausgebildeten Auslauf (13) des Vorratsbehälters (4) axial beweglich anliegt und mit einer unterseitigen ebenen Dichtringfläche (18) auf einer auf dem Einlauf (5) der Fördereinheit (7) vorgesehenen ebenen Dichtfläche (15) verschiebbar abgestützt ist.

2. Materialzuführvorrichtung nach Anspruch 1, **dadurch gekennzeichnet,** daß die Dichtungsfläche (17) als Dichtlippe ausgebildet ist.

3. Materialzuführvorrichtung nach einem der Ansprüche 1 oder 2, **dadurch gekennzeichnet,** daß die unterseitige ebene Dichtringfläche (18) als Dichtlippe ausgebildet ist.

4. Materialzuführvorrichtung nach einem der Ansprüche 1 bis 3, **dadurch gekennzeichnet,** daß die aufeinander gleitenden Teile (13,17,15,18) mit einem reibungsvermindernden Belag versehen sind.

## Claims

1. A material feed device for an extruder, comprising a more particularly funnel-shaped storage container (4) acting as a weighing container of a mass throughput weighing device and suspended with provision for free movement from measuring members (3) and discharging via a tubular outlet (5) into an inlet of a feed unit (6) of the extruder more particularly a cylinder containing a feed screw, the outlet and inlet being sealed off from outside by a seal (1b) which enables the storage container to move freely, characterized in that the seal (1b) comprises a rigid ring which bears with provision for axial movement via a sealing surface (17) extending around its radial inner side against the tubular outlet (13) of the storage container (4) and is borne with provision for movement via an underside flat sealing ring surface (18) on a flat sealing surface (15) provided on the inlet (5) of the feed unit (7).

2. A material feed device according to claim 1, characterized in that the sealing surface (17) extending around its radial inner side is shaped as a sealing lip.

3. A material feed device according to one of claims 1 or 2, characterized in that the underside flat sealing ring surface (18) takes the form of a sealing lip.

4. A material feed device according to one of claims 1 to 3, characterized in that the storage container has the shape of a funnel.

## Revendications

1. Dispositif d'alimentation en matière pour une extrudeuse, constitué d'un réservoir accumulateur (4), en particulier en forme d'entonnoir, qui est porté en étant mobile librement par des organes de mesure (3) en tant que réservoir de balance d'un dispositif de pesage à débit massique et qui débouche par une sortie tubulaire dans l'entrée (5) d'une unité de transport (6) de l'extrudeuse, en particulier d'un cylindre dans lequel est disposée une vis transporteuse, la sortie et l'entrée étant rendues étanches vers l'extérieur par un joint d'étanchéité (16) qui permet une mobilité libre pour le réservoir accumulateur,
caractérisé en ce que le joint d'étanchéité (16) est constitué par une bague rigide qui est adjacente, par une surface d'étanchéité périphérique (17) disposée extérieurement sur la face interne radiale, à la sortie (17) du réservoir accumulateur (4) réalisée sous forme tubulaire, en étant mobile axialement, et en appui à coulissement par une surface annulaire d'étanchéité plane inférieure (18) sur une surface d'étanchéité plane (15) disposée à l'entrée (5) de l'unité de transport (7).

2. Dispositif d'alimentation en matière selon la revendication 1,
caractérisé en ce que la surface d'étanchéité (17) est réalisée sous forme de lèvre d'étanchéité.

3. Dispositif d'alimentation en matière selon l'une des revendications 1 ou 2,
caractérisé en ce que la surface annulaire d'étanchéité plane inférieure (18) est réalisée sous forme de lèvre d'étanchéité.

4. Dispositif d'alimentation en matière selon l'une des revendications 1 à 3,
caractérisé en ce que les pièces (13, 17, 15, 18) glissant l'une sur l'autre sont munies d'un revêtement réduisant le frottement.